# NEUE EUROPÄISCHE PATENTSCHRIFT

(11) **EP 1 159 184 B2**
(45) Veröffentlichungstag und Bekanntmachung des Hinweises auf die Entscheidung über den Einspruch: **26.04.2006**
(45) Hinweis auf die Patenterteilung: 27.11.2002
(21) Anmeldenummer: 00909223.0
(22) Anmeldetag: 21.02.2000
(51) Int. Cl.: B62D 6/00

(54) **LENKVORRICHTUNG FÜR FAHRZEUGE**
STEERING SYSTEM FOR MOTOR VEHICLES
ENSEMBLE VOLANT POUR VEHICULE A MOTEUR

(30) Priorität: 01.03.1999 DE 19908832
(43) Veröffentlichungstag der Anmeldung: 05.12.2001
(73) Patentinhaber: Volkswagen Aktiengesellschaft, 38436 Wolfsburg (DE)
(72) Erfinder: SEMMLER, Carsten, D-38126 Braunschweig (DE); KREFT, Jörg, D-38126 Braunschweig (DE)
(74) Vertreter: Effert, Bressel und Kollegen
(86) Internationale Anmeldenummer: PCT/EP2000/001396
(87) Internationale Veröffentlichungsnummer: WO 2000/051874

(56) Entgegenhaltungen:
- DE-A- 19 650 475
- DE-C- 19 539 101
- US-A- 5 247 441
- US-A- 5 347 458

## Beschreibung

Die Erfindung betrifft eine Lenkvorrichtung für Fahrzeuge gemäß Oberbegriff des Anspruchs 1.

Es sind Lenkvorrichtungen für Fahrzeuge bekannt, bei denen zwischen Lenkrad und den lenkbaren Fahrzeugrädern des Fahrzeugs keine mechanische Kopplung besteht. Die am Lenkrad ausgeführten Lenkbewegungen werden mittels Winkelsensoren oder in anderer Weise elektronisch erfaßt und über elektrische Steuereinrichtungen In entsprechende Lenkbewegungen an den lenkbaren Fahrzeugrädern umgesetzt. Derartige Lenkvorrichtungen sind unter dem Begriff "Steer by Wire" bekannt. Durch die mechanische Entkopplung zwischen Lenkrad und lenkbaren Fahrzeugrädern kann eine direkte Rückmeldung des an den lenkbaren Fahrzeugrädern auftretenden Rückstellmoments zum Lenkrad nicht erfolgen.

Aus der gattungsgemäßen DE 195 39 101 C1 ist ein Rückwirkungssimulator für eine solche Lenkvorrichtung bekannt, bei dem eine Krafterzeugungsanordnung ein Rückstellmoment auf das Lenkrad bzw. auf die Lenkstange ausübt. Dabei ist eine Rückstellfederanordnung vorgesehen, die ein Rückstellmoment auf das Lenkrad ausübt. Der gewünschte Verlauf des Rückstellmoments in Abhängigkeit vom Lenkungseinschlag wird im wesentlichen durch einen Elektromotor erzeugt, der aufgrund der geforderten hohen Rückstellmomente entsprechend groß dimensioniert sein muß.

Der Erfindung liegt die Aufgabe zugrunde, für eine Lenkvorrichtung für Fahrzeuge, bei der keine direkte mechanische Kopplung zwischen Lenkrad und den lenkbaren Fahrzeugrädem besteht, auf einfache Weise ein auf das Lenkrad wirkendes Rückstellmoment mit einem möglichst gut geeigneten Drehmomentverlauf zu erzeugen.

Die Lösung dieser Aufgabe erhält man durch die im Anspruch 1 angegebenen Merkmale.

Zur Erzeugung des geeigneten Rückstellmoments wird eine Rückstelleinrichtung verwendet, die am Lenkrad bzw. an der mit dem Lenkrad verbundenen Lenkstange angreift. Der Verlauf des Rückstellmoments steigt mit zunehmendem Lenkausschlag zunächst geradlinig an und geht mit größer werdendem Lenkwinkel in einen annähernd flachen Drehmomentverlauf über. Somit simuliert die Rückeinstelleinrichtung mit verhältnismäßig großer Übereinstimmung ein Rückstellmoment, wie es bei Lenkvorrichtungen mit mechanischer Kopplung zwischen dem Lenkrad und den lenkbaren Fahrzeugrädern am Lenkrad auftritt.
Bei Erreichen des Lenkradendanschlags weist das Rückstellmoment einen steilen Anstieg auf, der durch eine entsprechend starke Anschlagfeder realisiert wird.
Einen vorgegebenen Verlauf des Rückstellmoments in Abhängigkeit vom Lenkausschlag kann man insbesondere sehr genau dadurch einhalten, dass ein zusätzlicher Elektromotor ein Korrekturmoment erzeugt, welches beispielsweise an der Lenkstange des Lenkrades angreifen kann. Da die Rückstelleinrichtung so ausgeführt ist, dass ein gewünschter Verlauf des Rückstellmoments zumindest annähernd bereits gegeben ist, müssen nur geringe Korrekturmomente erzeugt werden, was mit entsprechend geringem technischen Aufwand möglich ist.
Es besteht auch die Möglichkeit an den lenkbaren Fahrzeugrädern fahrsituationsabhängige Lenkungsgegenkräfte über Sensoren aufzunehmen, und diese Lenkungsgegenkräfte in Form von Korrekturmomenten auf das Lenkrad zu übertragen. Auf diese Weise kann eine Fahrbahnrückmeldung realisiert werden.
Der Verlauf des Rückstellmoments, welches von der Rückstelleinrichtung auf das Lenkrad übertragen wird, kann durch entsprechend nichtlineare Federsysteme oder durch über Steuerkurven auf das Lenkrad wirkende Federanordnungen realisiert werden.
Die Erfindung wird nachfolgend anhand eines in der Zeichnung dargestellten Ausführungsbeispieles näher erläutert:
Es zeigen:
- Figur 1: den Verlauf des Rückstellmoments in Abhängigkeit vom Lenkausschlag bei einer herkömmlichen Lenkvorrichtung mit mechanischer Kopplung zwischen Lenkrad und den lenkbaren Fahrzeugrädern,
- Figur 2: den Verlauf des Rückstellmoments am Lenkrad in Abhängigkeit vom Lenkausschlag für drei unterschiedliche Federanordnungen und
- Figur 3: den prinzipiellen Aufbau der Lenkvorrichtung mit einer Federanordnung und einem Elektromotor zur Erzeugung eines Korrekturmoments.

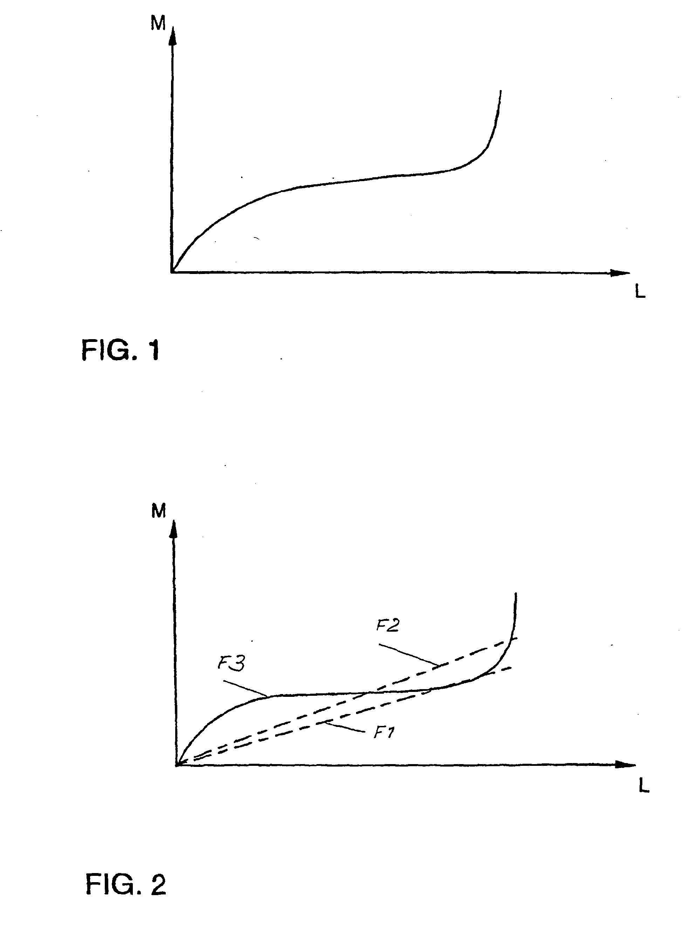

Bei dem in Figur 1 dargestellten Verlauf des Rückstellmoments M ist ersichtlich, daß mit zunehmendem Lenkausschlag L das am Lenkrad auftretende Rückstellmoment M zunächst in etwa geradlinig ansteigt und dann in einen flach ansteigenden Verlauf übergeht, bis schließlich der Endanschlag erreicht und das Rückstellmoment M wieder steil ansteigt. Bei einer Lenkvorrichtung, die keine mechanische Kopplung zwischen den lenkbaren Fahrzeugrädern und dem Lenkrad hat, kann ein entsprechender Verlauf des am Lenkrad auftretenden Rückstellmoments M mittels krafterzeugenden Einrichtungen realisiert werden.

Figur 2 zeigt den mittels unterschiedlicher Federanordnungen erzeugten Verlauf des Rückstellmoments M in Abhängigkeit vom Lenkausschlag L. Die Verläufe F1 und F2 zeigen einen linearen Verlauf des Rückstellmoments M, wobei eine deutliche Abweichung von dem an sich angestrebten Verlauf, wie er in Figur 1 dargestellt ist, besteht.

Mittels einer nicht- linear wirkenden Federanordnung kann ein Verlauf F3 realisiert werden, der weitgehend dem in Figur 1 dargestellten Verlauf des Rückstellmoments M entspricht. Mittels eines Elektromotors kann den Verläufen F1, F2 und F3 ein Korrekturmoment überlagert werden, um dadurch sehr exakt eine Simulation des Rückstellmoments M, wie es in Figur 1 dargestellt ist, zu erhalten.

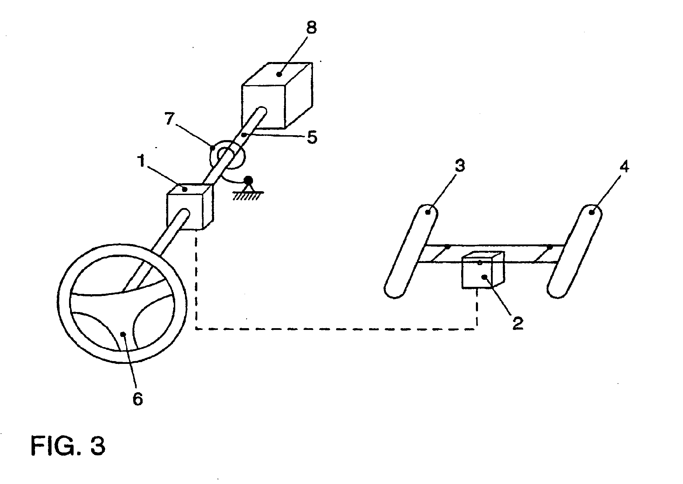

In Figur 3 ist der prinzipielle Aufbau einer Lenkvorrichtung dargestellt, die über elektrische Steuereinrichtungen 1, 2 die Lenkbewegungen an den lenkbaren Fahrzeugrädern 3, 4 ausführt.

An der Lenkstange 5 des Lenkrads 6 greift eine Federanordnung 7 an, die bei Auslenkung des Lenkrads 6 aus der Geradeausstellung ein Rückstellmoment auf die Lenkstange 5 und damit auf das Lenkrad 6 ausübt. Zusätzlich greift ein Elektromotor 8 an der Lenkstange 5 an, um ein Korrekturmoment auf die Lenkstange 5 zu übertragen.

Die Federanordnung 7 kann aus einer Kombination von mehreren Fedem bestehen, die an der Lenkstange 5 gegebenenfalls über Steuerkurven so angreifen, daß annähernd ein Verlauf des Rückstellmoments M, wie er in Figur 2 mit F3 bezeichnet ist, erhalten wird. Das vom Elektromotor 8 zu erzeugende Korrekturmoment muß dann nur noch geringfügige Werte aufweisen, so daß ein entsprechend klein dimensionierter Elektromotor 8 ausreicht.

### BEZUGSZEICHENLISTE

- 1, 2: Steuereinrichtungen
- 3, 4: Fahrzeugräder
- 5: Lenkstange
- 6: Lenkrad
- 7: Federanordnung
- 8: Elektromotor
- F1 bis F3: Verläufe
- M: Rückstellmoment
- L: Lenkausschlag

## Patentansprüche

1. Lenkvorrichtung für Fahrzeuge, bei der am Lenkrad (6) ausgeführte Lenkvorgänge über elektrische Steuereinrichtungen (1, 2) in entsprechende Lenkbewegungen an den lenkbaren Fahrzeugrädern (3, 4) umgesetzt werden, wobei eine Rückstelleinrichtung (7) ein Rückstellmoment (M) auf das Lenkrad (6) ausübt, wenn dieses aus seiner Geradeausposition ausgelenkt wird, wobei das von der Rückstelleinrichtung (7) erzeugte Rückstellmoment (M) mit zunehmendem Lenkausschlag (L) zunächst in etwa geradlinig ansteigt und mit größer werdendem Lenkausschlag (L) in einen annähernd flachen
Verlauf übergeht,
**dadurch gekennzeichnet, dass**
das Rückstellmoment (M) bei Erreichen des Lenkradanschlages steil ansteigt und
am Lenkradanschlag eine das Rückstellmoment (M) verstärkende Anschlagfeder angeordnet ist.

2. Lenkvorrichtung nach Anspruch 1, **dadurch gekennzeichnet, dass** der
Verlauf (F3) des vom Lenkausschlag (L) abhängigen Rückstellmoments (M) wenigstens annähernd dem Verlauf des Rückstellmoments (M) entspricht, wie er bei einem mechanisch mit den lenkbaren Fahrzeugrädern gekoppelten Lenkrad am Lenkrad auftritt.

3. Lenkvorrichtung nach einem der vorangegangenen Ansprüche, **dadurch gekennzeichnet, dass** dem von der Rückstelleinrichtung (7) auf das Lenkrad (6) ausgeübten Rückstellmoment (M) ein von einem Elektromotor (8) erzeugtes Korrekturmoment überlagert ist.

4. Lenkvorrichtung nach Anspruch 3, **dadurch gekennzeichnet, dass** auf die lenkbaren Fahrzeugräder (3, 4) einwirkende fahrsituationsabhängige Lenkungsgegenkräfte aufgenommen und daraus ein Korrekturwert für das Korrekturmoment abgeleitet wird.

5. Lenkvorrichtung nach einem der vorangegangenen Ansprüche, **dadurch gekennzeichnet, dass** mittels einer Steuerkurve ein gewünschter Verlauf des Rückstellmoments (M) realisiert wird.

## Claims

1. Steering device for vehicles, in which steering actions carried out on the steering wheel (6) are converted via electrical control means (1, 2) into corresponding steering movements on the steerable vehicle wheels (3, 4), a restoring means (7) exerting a restoring torque (M) on the steering wheel (6) when the latter is deflected out of its straight-ahead position, the restoring torque (M) generated by the restoring means (7) first rising approximately rectilinearly with an increasing steering lock (L) and merging into an approximately flat profile as the steering lock (L) becomes greater, **characterized in that** the restoring torque (M) rises steeply when the steering-wheel limit stop is reached, and a stop spring reinforcing the restoring torque (M) is arranged on the steering-wheel stop.

2. Steering device according to Claim 1, **characterized in that** the profile (F3) of the restoring torque (M) dependent on the steering lock (L) corresponds at least approximately to the profile of the restoring torque (M), such as occurs on the steering wheel when the steering wheel is coupled mechanically to the steerable vehicle wheels.

3. Steering device according to one of the preceding claims, **characterized in that** a correcting torque generated by an electric motor (8) is superposed on the restoring torque (M) exerted on the steering wheel (6) by the restoring means (7).

4. Steering device according to Claim 3, **characterized in that** steering counterforces dependent on the driving situation, which act on the steerable vehicle wheels (3, 4), are recorded, and a correcting value for the correcting torque is derived from these.

5. Steering device according to one of the preceding claims, **characterized in that** a desired profile of the restoring torque (M) is produced by means of a control curve.

## Revendications

1. Dispositif de direction pour véhicules, dans lequel des opérations de direction effectuées sur le volant de direction (6) sont converties par le biais de dispositifs de commande électriques (1, 2) en mouvements de direction correspondants au niveau des roues dirigeables du véhicule (3, 4), un dispositif de rappel (7) exerçant un couple de rappel (M) sur le volant de direction (6) lorsque celui-ci est dévié de sa position droite, le couple de rappel (M) produit par le dispositif de rappel (7) augmentant d'abord approximativement de manière linéaire avec l'angle de braquage (L) puis passant dans une allure approximativement plane pour un angle de braquage (L) croissant,
**caractérisé en ce que**
le couple de rappel (M) augmente fortement une fois atteinte la butée du volant et
un ressort de butée renforçant le couple de rappel (M) est disposé sur la butée du volant.

2. Dispositif de direction selon la revendication 1, **caractérisé en ce que** l'allure (F3) du couple de rappel (M) dépendant de l'angle de braquage (L) correspond au moins approximativement à l'allure du couple de rappel (M) qui se produit sur le volant de direction lorsque le volant de direction est accouplé mécaniquement aux roues dirigeables du véhicule.

3. Dispositif de direction selon l'une quelconque des revendications précédentes, **caractérisé en ce qu'**un couple de correction produit par un moteur électrique (8) s'ajoute au couple de rappel (M) exercé par le dispositif de rappel (7) sur le volant de direction (6).

4. Dispositif de direction selon la revendication 3, **caractérisé en ce que** les forces opposées à la direction, dépendant de la situation de conduite et agissant sur les roues dirigeables (3, 4) du véhicule sont enregistrées et que l'on en déduit une valeur de correction pour le couple de correction.

5. Dispositif de direction selon l'une quelconque des revendications précédentes, **caractérisé en ce que** l'on réalise au moyen d'une courbe de commande une allure souhaitée du couple de rappel (M).
